# EUROPEAN PATENT APPLICATION

(11) **EP 0 919 987 A2**
(43) Date of publication of application: **02.06.1999**
(21) Application number: 98630065.5
(22) Date of filing: 06.11.1998
(51) Int. Cl.: G10K 11/00, B06B 1/06

(54) **Ultrasonic probe assembly with comb-shaped array**

(30) Priority: 26.11.1997 US 979461
(71) Applicant: Emerson Electric Company, St. Louis Missouri 63136 (US)
(72) Inventor: Hackenberger, Dane E., Mifflintown, PA 17509 (US); Barshinger, James N., Dalton, PA 18414 (US)
(74) Representative: Weydert, Robert

(57) **Abstract**

The ultrasonic comb probe array assembly (20) comprises a plurality of probe heads (22), each probe head (22) comprising first and second supports (24,26), ultrasonic transducers (28) mounted on each support (24,26), a hinged connection (104,110) between the first and second supports (24,26) allowing relative pivotal movement in a plane to encircle a portion of the object. The probe heads (22) are secured together in parallel spaced relation with the hinged connections (104,110) generally aligned.

## Description

### FIELD OF THE INVENTION

This invention relates to the ultrasonic testing of materials, and in particular to an ultrasonic comb probe array assembly for generating ultrasonic waves in an object.

### BACKGROUND OF THE INVENTION

Ultrasound is commonly used to locate discontinuities and other imperfections in materials and to characterize materials and measure distances. Conventional ultrasonic testing employs longitudinal or shear waves in a point by point inspection of the object. More recently, ultrasonic guided wave techniques have been developed. See, generally Rose, Rajana, and Carr, Ultrasonic Guided Wave Inspection Concepts for Steam Generator Tubing, Materials Evaluation, February 1993, Page 307, incorporated herein by reference. These ultrasonic guided wave techniques involve launching ultrasonic waves at one position on an object, which propagate for substantial distances within the object, "guided" by the boundaries of the object. Defects in the object reflect the guided waves, and thus can be identified and located by monitoring the received waves.

Ultrasonic guided wave techniques offer several advantages over other ultrasonic inspection techniques, including the ability to simultaneously inspect the entire cross-section and length of an object; the elimination of complicated and expensive apparatus for positioning and indexing conventional ultrasonic probes; and increased sensitivity to some types of defects.

The design parameters for ultrasonic comb probes include factors such as size, shape, frequency, frequency band width, and coupling means. The probes currently in use are designed and built for particular applications. They are typically two pieces secured over the object, each piece having a plurality of ultrasonic transducers secured therein. One difficultly encountered with the comb probes presently available is that they are fragile and prone to failure. High energies used in some applications and the inefficiencies in the piezoelectric materials used in the transducers may cause some of this energy to be dissipated as heat. This heat can causes thermal stresses in the probe which can lead to failure of the ultrasonic transducer elements. Failure of a single element in conventional probes requires replacement of the entire probe.

Another difficulty encountered with the presently available comb probes is that the spacing between the transducers is fixed and can not be changed. Thus probe arrays are constructed for particular modes of operation. In guided wave applications, available construction techniques require that a different probe array be used for each different guided wave mode.

Still another difficulty encountered with presently available comb probes is coupling to objects whose surfaces are not perfectly smooth. Because of the rigidity of presently available arrays, if one element contacts a high point on the surface of the object, there will be a gap between the other elements and the surface. While in some cases these gaps can be bridged with a couplant, direct contact between the transducer and the object is preferable.

### SUMMARY OF THE INVENTION

The present invention provides an ultrasonic probe array assembly that is of simple, yet robust construction; that resists overheating of the transducers; that allows for replacement of failed transducers; that allows the spacing between the transducers to be changed; and which allows better coupling between the individual transducers and the surface of the object. Generally the array assembly of the present invention comprises a plurality of probe heads, each probe head comprising first and second supports. There is a transducer mounted on each support. The supports are hingedly connected to allow relative pivoting movement of the first and second supports in a plane. The probe heads are connected together in a parallel, spaced relation, with their hinged connections generally aligned. The probe heads are preferably separated by replaceable spacers, so that spacing between the probe heads can be changed.

This construction allows the individual probe heads to be replaced, and allows the spacing of the heads to be changed to generate different guided wave modes. The use of separate probe heads and spacers also reduces heat build up, reducing the risk of heat damage to the transducers and damage to the array assembly from thermal stresses.

The array assembly of the present invention is mounted on the test object with the individual probe heads of the array assembly each surrounding a portion of the object. These individual probe heads better accommodate variations in the surface of the test object, achieving better contact between the transducers and the object.

The array assembly of the present invention thus provides a simple yet robust apparatus for the ultrasonic guided wave testing of objects. The apparatus is resistant to heat damage and thermal stresses, it allows failed transducers to be easily replaced, it permits adjustment of the spacing between the transducers, and it achieves better contact between the transducers and the surface of the test object. These and other features and advantages will be in part apparent, and in part pointed out hereinafter.

### BRIEF DESCRIPTION OF THE DRAWINGS

Fig. 1 is a perspective view from above of a comb probe array assembly constructed according to the principles of this invention;
Fig. 2 is a perspective view from below of the comb probe array assembly;
Fig. 3 is a perspective view from the front of the comb probe array assembly;
Fig. 4 is a an exploded perspective view of the comb probe array assembly; and
Fig. 5 is an exploded perspective view of one of the probe heads comprising the comb probe array assembly.

Corresponding reference numerals indicate corresponding parts throughout the several views of the drawings.

### DETAILED DESCRIPTION OF THE PREFERRED EMBODIMENT

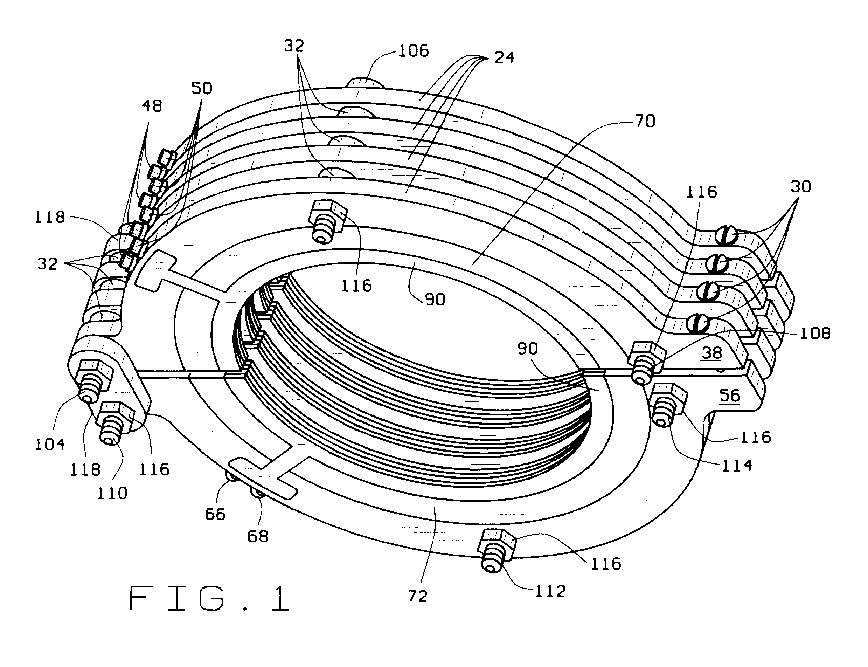

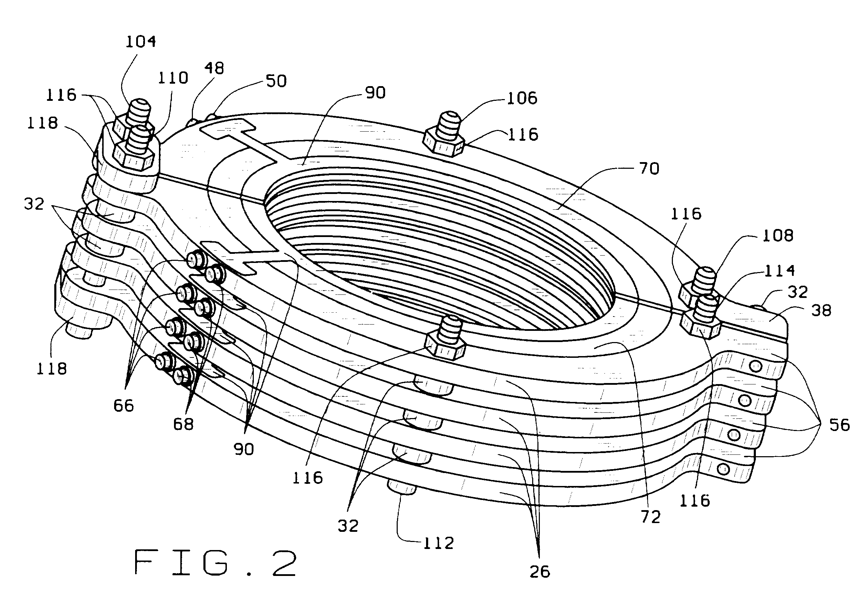

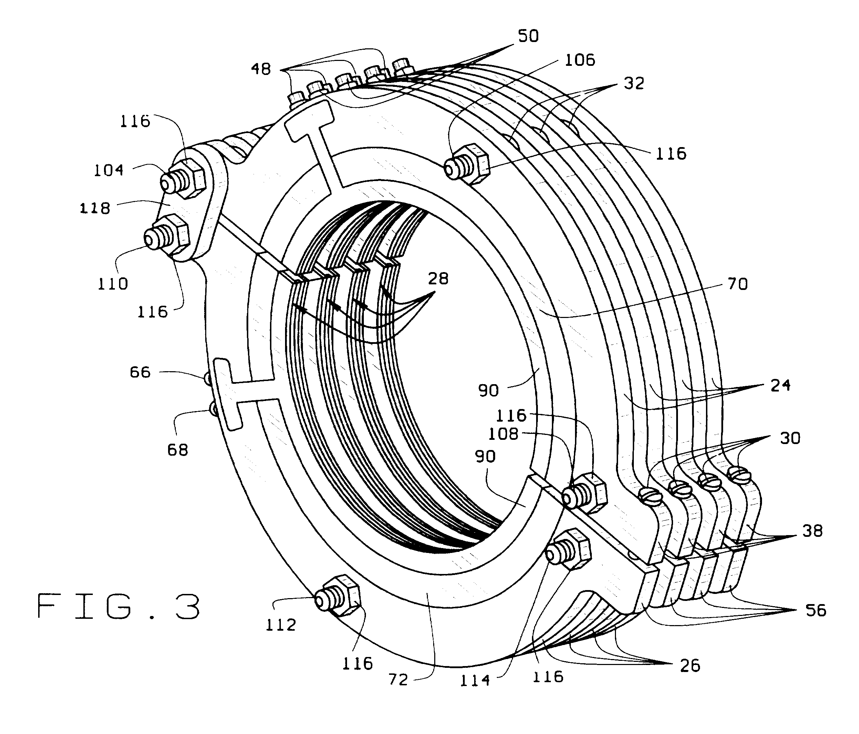

A comb probe array assembly constructed according to the principles of this invention is indicated generally as 20 in the Figs 1-4. The assembly 20 comprises a plurality of probe heads 22. Each probe head 22 comprises first and second supports 24 and 26. The first and second supports 24 and 26 are hingedly connected at one end for relative pivotal movement in a plane. Each of the first and second supports includes a transducer 28. Fasteners 30 between the first and second supports, can secure the supports around an object and hold their respective transducers 28 in intimate contact with the surface of an object.

As shown in Figs. 1-4, the probe heads 22 are arranged in a stack in parallel, spaced relationship, with the hinged connections generally aligned. There are preferably spacers 32 between adjacent probe heads 22. These spacers are preferably replaceable, as described below, so that the spacing of the probe heads 22, and more particularly the spacing of the transducers 28 on the probe heads, can be changed.

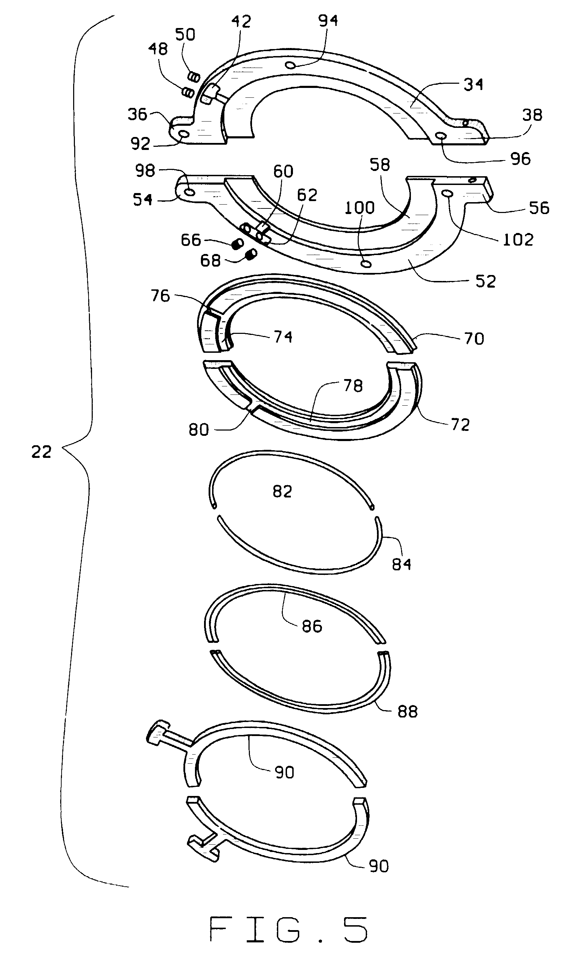

As best shown in Fig. 5, the supports 24 and 26 are mirror images of one another. The first support 24 comprises a generally semicircular housing 34 having tabs 36 and 38 projecting from the front and rear ends of the body, and a semicircular recess 40 in one face, adjacent the inner circumference of the semicircular housing. The housing 34 is preferably made of aluminum, which is rigid and light weight, yet easy to machine. There is a generally T-shaped cutcut 42 formed in the same face of the housing 34. The bottom of the stem of the "T" communicates with the semicircular recess 40. Two radial passages (not shown) extend from the outer circumference of the semicircular housing 34 to the top of the "T". Connectors 48 and 50 are mounted in these passages for making electrical connections with the probe head as described below.

Similarly, the seccnd support 26 comprises a generally semicircular housing 52 having tabs 54 and 56 projecting from the front and rear ends of the housing, and a semicircular recess 58 in one face, adjacent the inner circumference of the semicircular housing. The housing 52, like housing 34, is preferably made of aluminum. There is a generally T-shaped cutout 60 formed in the same face of the housing 52. The bottom of the stem of the "T" communicates with the semicircular recess 58. Two radial passages 62 and 64 extend from the outer circumference of the semicircular body to the top of the "T". Connectcrs 66 and 68 are mounted in these passages for making electrical connections with the probe head as described below.

Semicircular bodies 70 and 72 of an acoustic damping material are seated in the recess 40 and 58 in the first and second housings 34 and 52. The acoustic damping material is preferably an epoxy or epoxy composite, such as epoxy resin 2057 and catalyst 9 available from Grace Specialty Polymer, 55 Hayden Avenue, Lexington, MA 02173. The body 70 has a semicircular groove 74 on one face, adjacent its inner edge, and a radially extending groove 76 extending from its outer edge to the semicircular groove, that aligns with the T-shaped cutout 42. Similarly, the body 72 has a semicircular groove 78 on one face, adjacent its inner edge, and a radially extending groove 80 extending from its outer edge to the semicircular groove, that aligns with the T-shaped cutout 60.

The transducers 28 are preferably semicircular strips 82 and 84 of a piezoelectric material electrically connected to semicircular conductors 86 and 88, respectively. The piezoelectric material is preferably a PZT (lead zirconate titanate, such as those disclosed in The Application of 1-3 Piezocomposites in Acoustic Transducers, Wallace Arden Smith, Materials Division, Code 1131, Office of Naval Research, Arlington, Virginia 22217-5000, incorporated herein by reference. This composite may be cut into a strip and formed into a semicircular configuration by scoring and bending, or the composite may be sufficiently bendable. The conductors 86 and 88 are preferably semicircular pieces of conventional fiberglass circuit board material with copper clad conductor strips. Wires (not shown) soldered to the copper cladding and to the piezoelectric material electrically connect the conductors 86 and 88 to their respective piezoelectric strips 82 and 84.

The piezoelectric strips 82 and 84 and their associated conductors 86 and 88 fit within the grooves 74 and 78 in the bodies 70 and 72, respectively. The transducers 28 are secured in their respective supports with a polymer encapsulant 90 formed in situ. The encapsulant may be an epoxy resin 2057 and catalyst 9 available from Grace Specialty Polymers, 55 Hayden Ave., Lexington, MA 02173. After setting the encapsulant can be machined to have smooth surfaces even with the surface of the housing.

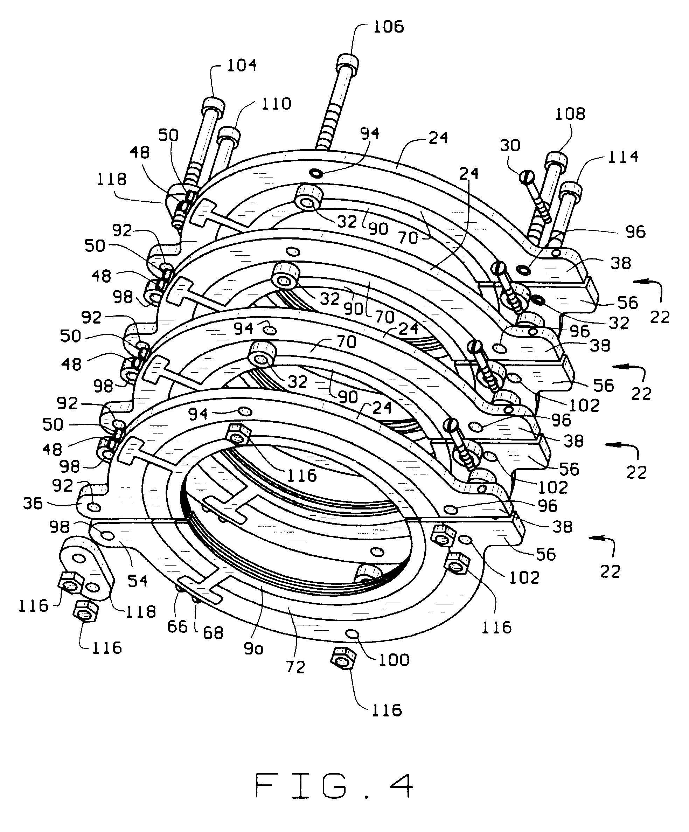

As shown in Figs. 4 and 5, the first supports 24 each have three holes 92, 94, and 96 therein. The hole 92 is located in the tab 36, the hole 94 is located generally in the center of the arc of the housing 34, and the hole 96 is located generally in the tab 38. Similarly the second supports 26 each have three holes 98, 100, and 102 therein. The hole 98 is located in the tab 54, the hole 100 is located generally in the center of the arc of the housing 52, and the hole 90 is located generally in the tab 56.

As best shown in Fig. 4, the probe heads 22 are arranged in parallel, spaced apart relation. Bolt 104 extends through the aligned holes 92, bolt 106 extends through the aligned holes 94, and bolt 108 extends through the aligned holes 96 in the first support 24. Bolt 110 extends through the aligned holes 98, bolt 112 extends through the aligned holes 100, and bolt 114 extends through the aligned holes 102, in the second support 26. Nuts 116 on the ends of the bolts 104, 106, and 108 hold the supports 24 and spacers 32 together. Similarly, nuts 116 on the ends of the bolts 110, 112, and 114 hold the supports 26 and spacers 32 together. The spacers are preferably made of nylon.

The bolts 104 and 110 extend through links 118 which hold the bolts together, thereby hingedly connecting the first supports 24 on bolt 104 with the second supports 26 on bolt 110.

A fastener 30 extends between the tabs 38 on the first supports 24 and the tab 56 of the respective second supports 26 to secure the supports around the object, and hold the transducers 28 in contact with the surface of the object.

### OPERATION

In operation, a comb probe array assembly is assembled from a plurality of probe heads 22 and spacers 32 selected to achieve the appropriate transducer spacing for the intended guided wave mode. The connectors 48 and 50 on the first supports 24 and the connectors 66 and 68 on the second supports 26 are daisy chained together. The array assembly 20 is secured on the inspected part by securing the individual probe heads 22 around the inspected part with fasteners 30. There is enough freedom in the assembly to allow the first and second supports 24 and 26 of each probe head 22 to fit closely against the surface of the pipe, holding their respective transducers 28 in close proximity to the surface of the pipe.

## Claims

1. An ultrasonic comb probe array assembly for mounting over the surface of an object to apply an ultrasonic signal to the object, the assembly comprising at least two probe heads, each head having a transducer thereon, and wherein the heads are secured together in a generally parallel, spaced apart relationship.

2. The ultrasonic comb probe array assembly according to claim 1 further comprising separable spacers separating adjacent heads to define their relative positions.

3. The ultrasonic comb probe array assembly according to claim 1 wherein each head comprises first and second supports, and wherein there is a transducer on each support.

4. An ultrasonic comb probe array assembly for mounting over the surface of an object to apply an ultrasonic signal to the object, the assembly comprising first and second supports configured to extend over the surface of the object, an ultrasonic transducer on each of the supports, and a hinged connection between the first and second supports allowing relative pivotal movement of the supports in a plane, the heads being secured together in parallel, spaced apart relation, with the hinged connections generally aligned.

5. The ultrasonic comb probe array assembly according to claim 4 further comprising a fastener extending between the first and second supports for urging the supports against the surface of the object to hold the transducers in ultrasonic communication with the object.

6. The ultrasonic comb probe array assembly according to claim 4 further comprising spacers between adjacent probe heads.

7. The ultrasonic comb probe array assembly according to claim 6 wherein there are spacers between the first supports of adjacent heads, and spacers between the second supports of adjacent heads.

8. The ultrasonic comb probe array assembly of according to claim 7 further comprising fasteners for securing each head around a portion of the object.

9. An ultrasonic comb probe array assembly for mounting on the surface of an object to apply an ultrasonic signal to the object, the assembly comprising at least two heads, each head comprising first and second supports hingedly connected together for relative pivotal movement in a plane to encircle a portion of the object, and a transducer on each support, the heads secured together in a generally parallel, spaced apart relationship with the hinged connections generally aligned.

10. The ultrasonic comb probe array assembly according to claim 9 further comprising spacers between adjacent heads.

11. The ultrasonic comb probe array assembly according to claim 9 wherein there are spacers between the first supports of adjacent heads, and spacers between the second supports of adjacent heads.

12. The ultrasonic comb probe array assembly of according to claim 9 further comprising fasteners for securing each head around a portion of the object.

13. The ultrasonic comb probe array assembly according to claim 9 wherein there are four probe heads.

14. An ultrasonic comb probe array assembly for mounting over the cylindrical surface of an object to apply an ultrasonic signal to, and receive a return signal from, the object, the assembly comprising a plurality of probe heads, each probe head comprising first and second supports having opposed concave inner surfaces, a hinged connection between the first and second supports for allowing relative pivotal movement between the supports in a plane, and an ultrasonic transducer mounted on the concave inner surface of each support; and a fastener for each probe head for securing the first and second sections together around the object to hold the ultrasonic transducers in ultrasonic communication with the object, the probe heads being secured together in parallel, spaced apart relation with the hinged connections generally aligned.

15. The ultrasonic comb probe array assembly according to claim 14 further comprising spacers between adjacent heads.

16. The ultrasonic comb probe array assembly according to claim 15 further comprising spacers between the first supports of adjacent heads, and spacers between the second supports of adjacent heads.

17. The ultrasonic comb probe array assembly according to claim 16 wherein the spacers are removably secured between the probe heads.

18. The ultrasonic comb probe array assembly according to claim 16 wherein there are four probe heads.

19. The ultrasonic comb probe array assembly according to claim 17 wherein the hinge comprises at least one elongate fastener extending through the first supports and the spacers between the first supports, and wherein there is at least one elongate fastener extending through the second supports and the spacers between the second supports, and a link securing the fasteners together.

20. A method of applying an ultrasonic test signal to an object comprising:
providing an ultrasonic comb probe array assembly comprising a plurality of probe heads, each head having first and second supports, a hinged connection between the supports allowing relative pivotal movement of the supports, and an ultrasonic transducer on each support, the heads arranged in parallel, spaced relation in an array with the hinged connections generally aligned; and
pivoting and fixing the supports of each individual probe head against the object to hold the transducers in ultrasonic communication with the object.

21. A method of applying a ultrasonic test signal to an object comprising:
providing an ultrasonic comb probe array assembly comprising a plurality of probe heads, each head having first and second supports, a hinged connection between the supports allowing relative pivotal movement of the supports, and an ultrasonic transducer on each support, the heads arranged in parallel, spaced relation in an array with the hinged connections generally aligned; and fixing the supports of each individual probe head against the object to hold the transducers in ultrasonic communication with the object.

22. A method of applying an ultrasonic signal to an object, comprising:
securing an assembly comprising plurality of individual probe heads around the object, the probe heads arranged in parallel, spaced relation, each head comprising a first and second supports hingedly connected for relatively pivotal movement in a plane, and an ultrasonic transducer on each head, the probe heads being secured together in a parallel relation with spacers between adjacent heads; and applying an ultrasonic frequency to the object with the transducer at a wave length evenly divisible into the distance between adjacent probe heads.

23. A method of applying an ultrasonic signal to an objection comprising:
assembling an ultrasonic comb array assembly from a plurality of probe heads and spacers, each probe head comprising a first and second supports hingedly connected for relative pivotal movement in a plane, and an ultrasonic transducer on each head, and the spacers sized to space the transducers on adjacent heads at an even multiple of the wave length of the signal;
fixing the individual probe heads of the array around the object; and
applying an ultrasonic signal to the object.

24. A method of assembling an ultrasonic comb probe array, the method comprising:
securing a plurality of probe heads, having transducers thereon, together with separable spacers between adjacent heads to form an array of generally parallel, spaced heads.

25. The method of claim 24 wherein the spacers are sized to space the transducers on adjacent heads at an even multiple of the wave length of the signal.
